# EUROPÄISCHE PATENTSCHRIFT

(11) **EP 2 583 935 B1**
(45) Veröffentlichungstag und Bekanntmachung des Hinweises auf die Patenterteilung: **30.04.2014**
(21) Anmeldenummer: 12007167.5
(22) Anmeldetag: 16.10.2012
(51) Int. Cl.: B67D 7/08, B67D 7/34, G01F 1/74

(54) **Anlage zur Abgabe von Flüssigkeit aus einem Tankwagen**
System for dispensing fluid from a tanker
Installation destinée à distribuer du liquide depuis un camion-citerne

(30) Priorität: 21.10.2011 DE 102011116575
(43) Veröffentlichungstag der Anmeldung: 24.04.2013
(73) Patentinhaber: Saeta GmbH & Co. KG, 22880 Wedel (DE)
(72) Erfinder: Haar, Thomas, DE - 25469 Halstenbek (DE)
(74) Vertreter: Hauck Patent- und Rechtsanwälte

(56) Entgegenhaltungen:
- EP-A2- 1 760 439
- WO-A2-2009/063471
- DE-C1- 19 733 715
- DE-U1-202009 011 888
- FR-A1- 2 779 132

## Beschreibung

Die Erfindung betrifft eine Anlage zur Abgabe von Flüssigkeit aus einem mindestens eine Kammer enthaltenden Tankwagen, umfassend mindestens eine mit mindestens einem Auslassventil der mindestens einen Kammer des Tankwagens verbindbare Abgabeleitung, an deren Ende ein Abgabeventil zur Abgabe von über das Auslassventil aus der Kammer durch die Abgabeleitung fließende Flüssigkeit angeordnet ist, mindestens eine Volumenmesseinrichtung zur Messung des über die Abgabeleitung abgegebenen Flüssigkeitsvolumens, mindestens eine Detektoreinrichtung zur Detektion von Gaseinschlüssen in der durch die Abgabeleitung fließenden Flüssigkeit und/oder mindestens eine Abscheideeinrichtung zum Abscheiden von Gaseinschlüssen in der durch die Abgabeleitung fließenden Flüssigkeit.

Tankwagen enthalten oftmals mehrere Kammern, in denen Benzin- oder Dieselkraftstoffe enthalten sind. Die Kraftstoffe werden mit den Tankwagen von einem Tanklager zu Tankstellen gebracht, wo sie über die Abgabeleitung beispielsweise in unterirdische Tanks abgegeben werden. Über eine Volumenmesseinrichtung, beispielsweise einen Turbinenzähler, wird das abgegebene Flüssigkeitsvolumen gemessen. Es ist auch bekannt, mittels einer Detektoreinrichtung Gaseinschlüsse in der Flüssigkeit zu detektieren und bei der Messung des abgegebenen Flüssigkeitsvolumens zu verhindern oder zu berücksichtigen. Auch ist es bekannt, Gaseinschlüsse in der Flüssigkeit durch sogenannte Gasabscheider aus der Flüssigkeit abzuscheiden. Naturgemäß dürfen Gaseinschlüsse bei dem abgegebenen Flüssigkeitsvolumen nicht mitgezählt werden. Eine Anlage der eingangs genannten Art mit einer Volumenmesseinrichtung und einer Gasdetektoreinrichtung ist beispielsweise bekannt aus DE 197 33 715 C1.

Es besteht das Problem, dass insbesondere zwischen dem Tanklager, an dem der Tankwagen befüllt wird, und dem Abgabeort, beispielsweise einer Tankstelle, Flüssigkeit unbefugt aus dem Tankwagen entnommen wird. Grundsätzlich soll dies durch einen Vergleich des bei der Flüssigkeitsbefüllung und bei der Flüssigkeitsabgabe jeweils gemessenen Flüssigkeitsvolumens überwacht werden. Es stellt sich allerdings heraus, dass die Volumenmesseinrichtung am Tankwagen trotz eines realen Defizits von Flüssigkeit häufig dasselbe Messergebnis anzeigt, wie eine Messeinrichtung es bei der Befüllung des Tankwagens angezeigt hat. Um dieser Manipulation zu begegnen, ist bei einem sogenannten Sealed Parcel Delivery System (SPDS) vorgesehen, dass sämtliche Öffnungen des Tankfahrzeugs verplombt und/oder mit Sensoren überwacht werden. Auf diese Weise soll ein unbefugter Zugang zu der in dem Tankwagen enthaltenen Flüssigkeit zwischen der Befüllung und der Abgabe erkannt werden. Die Überwachung findet teilweise satellitengestützt und in Echtzeit statt. Diese Vorgehensweise ist zum einen mit einem erheblichen Aufwand verbunden. Darüber hinaus hat sich in der Praxis herausgestellt, dass auch derartige Verplombungen manipuliert werden, so dass auch diese Vorgehensweise nicht die erforderliche Sicherheit bietet. Insbesondere bei einem Mehrschichtbetrieb erfolgt in der Regel auch ein Wechsel der Fahrer eines solchen Tankwagens, so dass die Nachverfolgbarkeit von Manipulationen und die regelmäßige Überwachung der Plomben und der Unversehrtheit der Sensoren unrealistisch ist.

Ausgehend von dem erläuterten Stand der Technik liegt der Erfindung die Aufgabe zugrunde, eine Anlage der eingangs genannten Art bereitzustellen, die mit weniger Aufwand eine höhere Sicherheit gegen einen Diebstahl von Flüssigkeit aus dem Tankwagen bietet.

Die Erfindung löst diese Aufgabe durch den Gegenstand von Anspruch 1 und den Gegenstand von Anspruch 2. Vorteilhafte Ausgestaltungen finden sich in den abhängigen Ansprüchen, der Beschreibung und den Figuren.

Für eine Anlage der eingangs genannten Art löst die Erfindung die Aufgabe nach einem ersten Aspekt dadurch, dass die mindestens eine Volumenmesseinrichtung in einer verschließbaren Kapsel angeordnet ist, die mit Mitteln versehen ist, die ein unbefugtes Öffnen der Kapsel sicher und dokumentierbar anzeigen, und dass die Detektoreinrichtung und/oder die Abscheideeinrichtung ebenfalls in der Kapsel angeordnet ist.

Nach einem zweiten Aspekt löst die Erfindung die Aufgabe für eine Anlage der eingangs genannten Art dadurch, dass die mindestens eine Volumenmesseinrichtung in einer nicht zerstörungsfrei zu öffnenden Kapsel angeordnet ist, und dass die Detektoreinrichtung und/oder die Abscheideeinrichtung ebenfalls in der Kapsel angeordnet ist

Wie oben erläutert, zielt der Stand der Technik darauf, eine unerlaubte Entnahme von Flüssigkeit aus dem Tankwagen durch eine vollständige Überwachung sämtlicher Öffnungen des Leitungssystems in dem Tankwagen zu verhindern. Wie ebenfalls erläutert, ist dies sehr aufwendig und bei allem Aufwand kann eine unzulässige Flüssigkeitsentnahme nicht sicher verhindert werden. Daher basiert die Erfindung auf einem grundlegend anderen Ansatz als der Stand der Technik. Erfindungsgemäß ist das Verhindern einer unerlaubten Entnahme von Flüssigkeit nicht das primäre Ziel. Der mit dem Versuch, eine solche unerlaubte Entnahme zu verhindern, verbundene Aufwand kann erfindungsgemäß daher vermieden werden. Erfindungsgemäß wird dagegen sichergestellt, dass eine unzulässige Entnahme von Flüssigkeit aus dem Tankwagen mit Sicherheit erkannt werden kann. Der hierdurch entstandene Schaden wird also nachweisbar und ein Schadenersatzanspruch durchsetzbar. Um dies zu erreichen, sind erfindungsgemäß die Volumenmesseinrichtung und die Detektoreinrichtung bzw. die Abscheideeinrichtung in einer verschließbaren Kapsel angeordnet, die also insbesondere eine verschließbare Öffnung aufweist. Die Kapsel ist mit Mitteln versehen, die ein unerlaubtes Öffnen der Kapsel sicher und dokumentierbar erkennen und anzeigen. Die Kapsel ist also mit einem leicht kontrollierbaren Siegel bzw. einer nicht manipulierbaren Sensorik versehen. Alternativ können die Volumenmesseinrichtung und die Detektoreinrichtung bzw. die Abscheideeinrichtung auch in einer nur durch Zerstörung zu öffnenden Kapsel angeordnet sein. Eine Manipulation der Volumenmesseinrichtung und der Detektoreinrichtung bzw. der Abscheideeinrichtung wird erfindungsgemäß somit sicher verhindert. Die Erfindung basiert auf der Erkenntnis, dass die Einleitung von Luft, insbesondere zwischen die Detektoreinrichtung und die Volumenmesseinrichtung, und manchmal auch Wasser die typische Manipulationsmaßnahme ist, um das tankfahrzeugseitige Messsystem auf einen bestimmten Zählerstand für die abgegebene Flüssigkeitsmenge zu treiben, ohne die entsprechende Flüssigkeitsmenge auch wirklich durchzuleiten. Eine solche Einleitung von Luft in das Leitungssystem des Tankwagens wird erfindungsgemäß durch die Detektoreinrichtung erkannt bzw. durch die Abscheideeinrichtung abgeschieden. Diese zu Manipulationszwecken eingeleitete Luft wird von der erfindungsgemäßen Volumenmesseinrichtung somit nicht mitgemessen. Insbesondere ist durch das erfindungsgemäße gemeinsame Kapseln der Detektoreinrichtung bzw. der Abscheideeinrichtung mit der Volumenmesseinrichtung keine Einleitung von Luft zu Manipulationszwecken zwischen der Detektoreinrichtung bzw. der Abscheideeinrichtung und der Volumenmesseinrichtung möglich. Die Volumenmesseinrichtung gibt vielmehr den tatsächlich bei der Abgabe an einer Tankstelle durchgeleiteten Flüssigkeitsvolumenwert an. Durch eine manipulationssichere Messanlage kann eine unerlaubte Einleitung von Luft oder Wasser und damit eine unerlaubte Entnahme von Flüssigkeit aus dem Tankwagen sicher erkannt werden kann. Dies wiederum führt dazu, dass eine solche unzulässige Entnahme nicht mehr vorgenommen wird, da sie jedenfalls sicher rückverfolgbar ist.

Da erfindungsgemäß nur eine Öffnung mit einem Siegel versehen werden muss, nämlich die Öffnung der Kapsel, kann bei dieser Versiegelung ein höherer Aufwand betrieben werden als wenn eine große Vielzahl von Öffnungen und Ventilen des Tankwagens überwacht werden muss, wie beim Stand der Technik. Sofern die nur durch Zerstörung zu öffnenden Kapsel eingesetzt wird, ist ein unbefugtes Öffnen der Kapsel naturgemäß ebenfalls sofort erkennbar. Der erfindungsgemäße Ansatz führt damit einerseits zu einer höheren Manipulationssicherheit. Gleichzeitig ist der mit der erfindungsgemäßen Überwachung verbundene Aufwand viel geringer als beim Stand der Technik, da erfindungsgemäß eben nicht sämtliche Öffnungen und Leitungen des Tankwagens in aufwendiger Weise überwacht werden müssen. Durch die Überwachung der Kapselung allein ist sichergestellt, dass eine unerlaubte Entnahme von Flüssigkeit rückverfolgbar erkannt wird.

Die Kapsel kann beispielsweise aus einem Metallwerkstoff bestehen, der insoweit auch eine Abschirmung gegen elektromagnetische Manipulation von außen gewährleistet. Insbesondere wenn die nur durch Zerstörung zu öffnende Kapsel zum Einsatz kommt, können die Volumenmesseinrichtung und die Detektoreinrichtung bzw. die Abscheideeinrichtung in die Kapsel eingegossen sein, beispielsweise in einen Metall- oder Kunststoffwerkstoff. Die Kapsel bildet also ein nicht zerstörungsfrei zu öffnendes Gehäuse. Hierdurch wird eine besonders hohe Manipulationssicherheit erreicht. Die Volumenmesseinrichtung kann weiterhin einen in der Abgabeleitung angeordneten Turbinenzähler umfassen. Die Detektoreinrichtung kann beispielsweise einen Gasblasendetektor umfassen. Beides ist an sich bekannt. Die Volumenmesseinrichtung kann also insbesondere in der Abgabeleitung angeordnet sein. Auch Gasabscheideeinrichtungen sind an sich bekannt. Die Vorrichtung muss allerdings keine Abscheideeinrichtung aufweisen. Diese sind in der Regel vergleichsweise groß bauend. Grundsätzlich kann die erfindungsgemäße Anlage abgesehen von der erfindungsgemäßen Kapselung so aufgebaut sein, wie aus DE 197 33 715 C1 bekannt. Eine solche Vorrichtung und insbesondere die Detektor-und Volumenmesseinrichtung, besitzt einen sehr kompakten Aufbau und ist daher besonders gut für die erfindungsgemäße Kapselung geeignet.

Das Auslassventil des Tankwagens kann ein Bodenventil sein. Der Tankwagen kann, wie an sich bekannt, mehrere Kammern umfassen, wobei die Kammern jeweils ein solches Auslassventil aufweisen können, über das Flüssigkeit aus den Kammern in die Abgabeleitung fließen kann. Dies kann durch Schwerkraft erfolgen. Die Abgabeleitung kann ein Gefälle aufweisen, so dass die Flüssigkeit ebenfalls per Schwerkraft durch die Abgabeleitung zum Abgabeventil gefördert wird. Es kann allerdings auch eine Pumpe für die Flüssigkeit in der Abgabeleitung angeordnet sein. Bei der Flüssigkeit kann es sich beispielsweise um Benzin- oder Dieselkraftstoff handeln. Die erfindungsgemäße Anlage kann in einen Tankwagen integriert sein. Entsprechend betrifft die Erfindung auch einen Tankwagen mit einer darin installierten erfindungsgemäßen Anlage.

Die Mittel der Kapsel, die ein unbefugtes Öffnen anzeigen, können mindestens einen Sensor umfassen. Bei dem mindestens einen Sensor kann es sich um einen elektronischen Sensor handeln. Insbesondere kann der mindestens eine Sensor einen RFID-Transponder umfassen. Der RFID-Transponder kann bei verschlossener Kapsel aktiv sein und bei geöffneter Kapsel passiv sein. Weiterhin ist es möglich, dass der RFID-Transponder bei verschlossener Kapsel oder bei geöffneter Kapsel ein codiertes Signal an eine Auswerteeinrichtung der Anlage sendet, wobei sich die Codierung der Signale ändert. Die Änderung der Codierung kann beispielsweise nach jedem ausgesendeten Signal erfolgen. Es ist möglich, dass die Änderung der Codierung nach einem vorgegebenen Algorithmus erfolgt. Sie kann regelmäßig oder unregelmäßig erfolgen. Der mindestens eine Sensor kann insbesondere im Bereich der Öffnung der Kapsel angeordnet sein. Der mindestens eine Sensor kann dabei innerhalb der Kapsel angeordnet sein, so dass er bei verschlossener Kapsel von außen nicht zugänglich ist. Dies erhöht die Manipulationssicherheit. Dem Fachmann sind Maßnahmen zur Ausgestaltung manipulationssicherer Sensoren grundsätzlich bekannt, so dass diese nicht weiter im Detail erläutert werden.

Wie eingangs erläutert, kommt es neben der Einleitung von Luft manchmal auch zu einer Einleitung von Wasser, um die Volumenmesseinrichtung auf einen höheren Zählerstand zu manipulieren als es der tatsächlich abgegebenen Kraftstoffmenge entspricht. Aus diesem Grund kann die Detektoreinrichtung weiterhin einen Wasserdetektor zur Detektion von Wassereinschlüssen in der durch die Abgabeleitung fließenden Flüssigkeit umfassen. Der Wasserdetektor kann direkt in einen Gasdetektor integriert sein oder separat ausgebildet sein. Er ist allerdings, wie der Gasdetektor in der Kapsel angeordnet, um eine Manipulation sicher zu verhindern. Eine Detektion von Wassereinschlüssen kann beispielsweise über eine Messung der Leitfähigkeit der Flüssigkeit erfolgen. So besitzt Wasser eine messbar andere Leitfähigkeit als beispielsweise Diesel- oder Benzinkraftstoff.

Nach einer weiteren Ausgestaltung können die Verbindungen, insbesondere sämtliche Verbindungen, zwischen einem durch die Kapsel verlaufenden Abschnitt der Abgabeleitung und den außerhalb der Kapsel verlaufenden Abschnitten der Abgabeleitung innerhalb der Kapsel angeordnet sein. Bei derartigen Verbindungen kann es sich um Flanschverbindungen handeln. Indem diese Verbindungen innerhalb der Kapsel angeordnet sind, ist eine Manipulation an den Verbindungsstellen durch das hierzu erforderliche Öffnen der Kapsel sicher erkennbar. Außerdem ist auf diese Weise eine Demontage der gesamten sicheren Messanlage ohne Öffnen der Kapsel nicht möglich. Nach einer weiteren Ausgestaltung ist es möglich, dass bei verschlossener Kapsel ein Zugang zu dem innerhalb der Kapsel verlaufenden Abschnitt der Abgabeleitung von außen nur über die innerhalb der Kapsel angeordneten Verbindungen möglich ist. Es ist also insbesondere möglich, dass keine Entlüftungsleitungen oder ähnliches vorgesehen sind, die von dem innerhalb der Kapsel verlaufenden Abschnitt der Abgabeleitung aus der Kapsel heraus führen. Es ist weiterhin möglich, dass die gesamte Anlage ohne solche Entlüftungsleitungen auskommt. Gerade die eingangs angesprochene Anlage, wie sie aus DE 197 33 715 C1 bekannt ist, kann auf derartige Entlüftungsleitungen verzichten und eignet sich daher für den Einsatz in der erfindungsgemäßen manipulationssicheren Anlage besonders gut.

Nach einer weiteren Ausgestaltung kann vorgesehen sein, dass die Anlage mindestens eine Auswerteeinrichtung umfasst zur Auswertung von Signalen von der innerhalb der Kapsel angeordneten Volumenmesseinrichtung und/oder der innerhalb der Kapsel angeordneten Detektoreinrichtung und/oder der innerhalb der Kapsel angeordneten Abscheideeinrichtung und/oder den Mitteln, die ein unbefugtes Öffnen der Kapsel anzeigen. Die Auswerteeinrichtung kann ebenfalls innerhalb der Kapsel angeordnet sein. Die Auswerteeinrichtung kann aber auch außerhalb der Kapsel angeordnet sein, wobei die Auswerteeinrichtung mittels einer in die Kapsel geführten elektrischen Verbindungsleitung mit der Volumenmesseinrichtung und/oder der Detektoreinrichtung und/oder der Abscheideeinrichtung und/oder den Mitteln, die ein unbefugtes Öffnen der Kapsel anzeigen, verbunden ist. Bei dieser Ausgestaltung liegt der Anschluss der elektrischen Verbindungsleitung an die Volumenmesseinrichtung bzw. die Detektoreinrichtung bzw. die Abscheideinrichtung bzw. die Mittel zum Anzeigen eines unbefugten Öffnens der Kapsel ebenfalls innerhalb der Kapsel. Hierdurch wird die Manipulationssicherheit hinsichtlich der Verbindungsleitung erhöht. Entsprechend kann nach einer weiteren Ausgestaltung vorgesehen sein, dass die elektrische Verbindungsleitung abgeschirmt, also armiert, ist. Die Auswerteeinrichtung kann weiterhin dazu ausgebildet sein, über die elektrische Verbindungsleitung analoge elektrische Signale zu empfangen. Es kann beispielsweise in der Verbindungsleitung ständig ein Strom fließen, wobei lediglich durch unterschiedliche Stromstärken eine Signalübertragung erfolgt. Die Auswerteeinrichtung umfasst einen sogenannten Zählerkopf, der anhand der von der Volumenmesseinrichtung übermittelten Signale, gegebenenfalls unter Berücksichtigung der Signale der Detektoreinrichtung bzw. der Abscheideeinrichtung, das aus dem Tank abgegebene Flüssigkeitsvolumen zählt. Darüber hinaus empfängt die Auswerteeinrichtung von den Mitteln zum Anzeigen eines unbefugten Öffnens der Kapsel, insbesondere einem oder mehrerer Sensoren, ausgesandte Signale, mit denen wie erläutert eine unbefugtes Öffnen der Kapsel angezeigt werden kann. Wie eingangs erläutert, kann vorgesehen sein, dass derartige Sensoren bei geschlossener Kapsel Signale senden und bei geöffneter Kapsel derartige Signale nicht mehr senden. Auf diese Weise kann auch eine Störung der Sensoren nicht dazu genutzt werden, die Kapsel unbemerkt zu öffnen. Die Anschlussmittel zum Anschließen der Verbindungsleitung an die Auswerteeinrichtung können in einer zweiten verschließbaren Kapsel angeordnet sein, die mit Mitteln versehen ist, die ein unbefugtes Öffnen der zweiten Kapsel anzeigen. Beide Anschlüsse der Verbindungsleitung können somit gegen Manipulation abgesichert sein. Damit ist auch ein weiterer Manipulationsweg abgeschnitten. So wird zum Teil versucht, durch Manipulation des Zählerkopfes, beispielsweise Senden von falschen Zählsignalen, ein anderes abgegebenes Flüssigkeitsvolumen anzeigen zu lassen als es tatsächlich abgegeben wurde. Die Mittel zum Anzeigen eines unbefugten Öffnens der zweiten Kapsel können wiederum mindestens einen Sensor umfassen, der ein unbefugtes Öffnen der Kapsel anzeigt. Dieser mindestens eine Sensor kann wiederum ein elektronischer Sensor sein, beispielsweise einen RFID-Transponder umfassen. Der RFID-Transponder kann wiederum bei verschlossener Kapsel aktiv und bei geöffneter Kapsel passiv sein. Außerdem kann der RFID-Transponder wiederum bei verschlossener Kapsel oder bei geöffneter Kapsel ein codiertes Signal an eine Auswerteeinrichtung der Anlage senden, wobei sich die Codierung der Signale in der oben erläuterten Weise ändern kann. Außerdem kann der mindestens eine Sensor wiederum innerhalb der zweiten Kapsel angeordnet sein, so dass er bei geschlossener zweiter Kapsel von außen nicht zugänglich ist. Wie die erste Kapsel kann auch die zweite Kapsel aus einem Metallwerkstoff bestehen, der eine Manipulation mit elektromagnetischen Signalen verhindert.

Die Anlage kann weiterhin einen GPS-Empfänger umfassen, mit dem der Ort der Anlage bzw. eines hiermit ausgestatteten Tankwagens, insbesondere der Ort einer Abgabe von Flüssigkeit aus dem Tankwagen, also der sicheren Messung ermittelbar ist. Auf dieser Grundlage kann die Anlage auch Sperrmittel umfassen, durch die ein Betrieb der Anlage außerhalb von zuvor definierten Orten, beispielsweise bestimmten Tankstellen, gesperrt werden kann. Schließlich kann die Anlage eine Zeiterfassungseinrichtung umfassen, mit der der Zeitpunkt eines Betriebs der Anlage ermittelbar bzw. in Echtzeit überwachbar ist. Es kann ein sogenannter Time Stamp erstellt werden, so dass die Nutzung der Anlage und damit die Abgabe von Flüssigkeit lückenlos dokumentierbar ist. Durch eine GPS-Überwachung, gegebenenfalls in Kombination mit einer Zeiterfassung, wird auch sichergestellt, dass die Volumenmesseinrichtung nicht an einem anderen Ort als dem vorgesehenen Abgabeort betrieben wird. So wird sicher verhindert, dass die Anlage nicht beispielsweise durch ein Pumpen der in dem Tankwagen enthaltenen Flüssigkeit im Kreis, also zunächst einer durch die Volumenmesseinrichtung gemessenen Abgabe durch das Abgabeventil und danach einem direkten Wiedereinleiten in die Kammer des Tankwagens, manipuliert werden kann. Bei einer solchen Manipulation würde die Volumenmesseinrichtung bereits vor der Abgabe der Flüssigkeit an dem Abgabeort unzulässigerweise einen beispielsweise von Null verschiedenen Zählerstand aufweisen. Dies kann durch den Einsatz eines GPS-Empfängers sicher verhindert werden.

Ein Ausführungsbeispiel der Erfindung wird nachfolgend anhand von Figuren näher erläutert. Es zeigen schematisch:
- Fig. 1: eine erfindungsgemäße Anlage in einer Schnittansicht und
- Fig. 2: die Anlage aus Fig. 1 in einer Schnittansicht entlang der Linie A-A in Fig. 1.

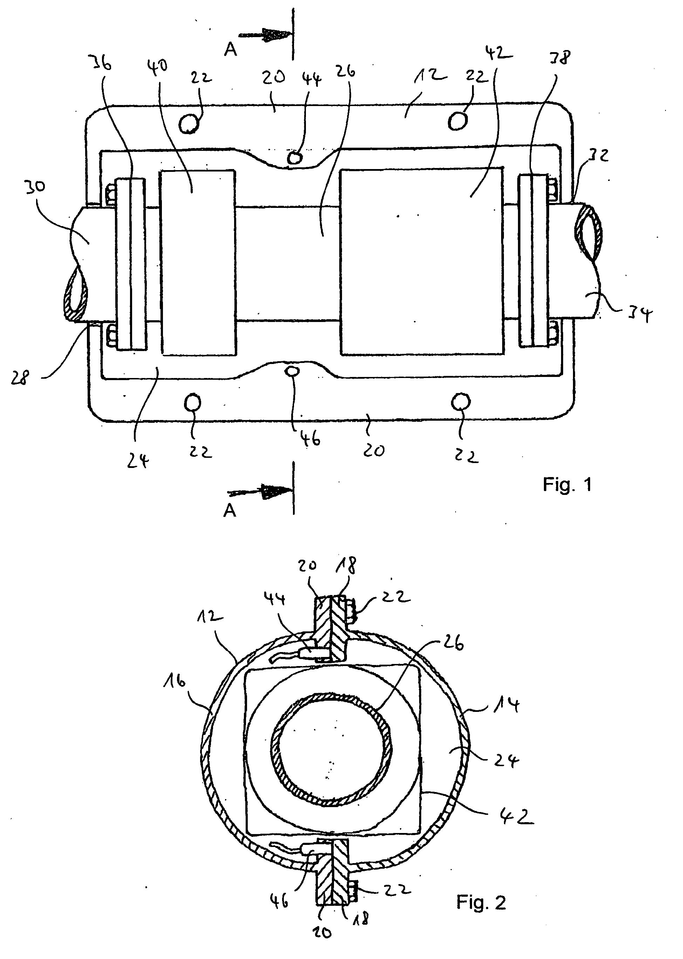

Soweit nichts anderes angegeben ist, bezeichnen in den Figuren gleiche Bezugszeichen gleiche Gegenstände. In den Figuren 1 und 2 ist eine erfindungsgemäße Anlage zur Abgabe von Flüssigkeit aus einem nicht näher gezeigten, mindestens eine Kammer enthaltenden Tankwagen gezeigt. Insbesondere kann der Tankwagen mehrere Kammern aufweisen. Bei der abzugebenden Flüssigkeit kann es sich beispielsweise um Diesel- oder Benzinkraftstoff handeln. In den Figuren 1 und 2 ist eine Kapsel 12 in einem verschlossenen Zustand dargestellt, die im verschlossenen Zustand eine im Wesentlichen zylindrische Form besitzt. Die Kapsel 12 weist zwei im Querschnitt jeweils halbkreisförmige Kapselhälften 14, 16 auf, die jeweils einen Flansch 18, 20 besitzen. Mittels einer Schraubverbindung 22 sind die beiden Kapselhälften 14, 16 an ihren Flanschen 18, 20 miteinander verschraubt, wie insbesondere in Figur 2 zu erkennen. Die Kapsel 12 bildet einen im Wesentlichen zylindrischen Hohlraum 24. In dem Hohlraum 24 ist ein erster Abschnitt 26 einer Abgabeleitung zur Abgabe von Flüssigkeit aus der mindestens einen Kammer des Tankwagens angeordnet. Die Fließrichtung der Flüssigkeit ist in dem gezeigten Beispiel in Figur 1 von links nach rechts. Am in Figur 1 linken Ende der Kammer 12 ist durch eine Einlassöffnung 28 ein zweiter Abschnitt 30 der Abgabeleitung geführt, welcher in der Ansicht in Figur 1 nur zum Teil dargestellt ist. Dieser Abschnitt 30 ist an seinem anderen, nicht dargestellten Ende mit einem nicht gezeigten Bodenventil einer Kammer des Tankwagens verbunden. An dem in Figur 1 rechten Ende der Kapsel 12 ist durch eine Auslassöffnung 32 hindurch ein dritter Abschnitt 34 der Abgabeleitung geführt, welcher ebenfalls nur zum Teil dargestellt ist. Dieser dritte Abschnitt 34 ist mit einem in Strömungsrichtung der Flüssigkeit unmittelbar hinter der Kammer 12 angeordneten, nicht gezeigten Abgabeventil verbunden, über das durch die Abgabeleitung geführte Flüssigkeit abgegeben werden kann. Der Aufbau der Anlage in Strömungsrichtung der Flüssigkeit vor und hinter der Kapsel 12 kann beispielsweise ausgestaltet sein wie aus der DE 197 33 715 C1 bekannt.

Die in die bzw. aus der Kapsel geführten Abschnitte 30, 34 der Abgabeleitung sind über jeweils eine ebenfalls in dem durch die Kapsel 12 gebildeten Hohlraum 24 angeordnete Flanschverbindung 36, 38 mit dem in dem Hohlraum 24 der Kapsel 12 verlaufenden Abschnitt 26 der Abgabeleitung verbunden. In Strömungsrichtung der Flüssigkeit durch den Abschnitt 26 der Abgabeleitung ist ebenfalls in dem durch die Kapsel 12 gebildeten Hohlraum 24 in dem Abschnitt 26 der Abgabeleitung zunächst eine Detektoreinrichtung 40 zur Detektion von Gaseinschüssen in der durch die Abgabeleitung fließenden Flüssigkeit angeordnet, vorliegend ein Gasblasensensor. In Strömungsrichtung der Flüssigkeit durch die Abgabeleitung dahinter ist ebenfalls in dem durch die Kapsel 12 gebildeten Hohlraum 24 in dem Abschnitt 26 der Abgabeleitung eine Volumenmesseinrichtung 42, vorliegend ein Turbinenzähler, zur Messung des über die Abgabeleitung abgegebene Flüssigkeitsvolumens angeordnet.

Bei verschlossener Kapsel 12 von außen unzugänglich sind im Innenbereich der Verbindungsflansche 20, 18 zwei Sensoren 44, 46 angeordnet, die ein unbefugtes Öffnen der Kapsel 12 anzeigen. Bei den Sensoren 44, 46 kann es sich beispielsweise um elektronische Sensoren handeln, die beispielsweise jeweils einen RFID-Transponder umfassen. Die Sensoren 44, 46 können so ausgestaltet sein, dass sie beispielsweise bei verschlossener Kapsel 12 in regelmäßigen Abständen ein codiertes Signal an eine außerhalb der Kapsel 12 angeordnete, nicht näher gezeigte Auswerteeinrichtung senden. Um die Übertragungssicherheit zu erhöhen, kann vorgesehen sein, dass sich die Codierung der Signale beispielsweise nach einem bestimmter Algorithmus zwischen jedem Sendevorgang verändert. Wird die Kapsel 12 durch Lösen der Verschraubungen 22 unbefugt geöffnet, können die Sensoren 44, 46 beispielsweise das Senden der codierten Signale unterbrechen. Auf diese Weise ist in der Auswerteeinrichtung feststellbar, dass die Kapsel 12 unbefugt geöffnet wurde und möglicherweise eine Manipulation der darin angeordneten Detektoreinrichtung 40 oder Volumenmesseinrichtung 42 oder der Flanschverbindung 36, 38 erfolgt ist. Die Auswerteeinrichtung kann über eine in den Hohlraum 24 der Kapsel 12 hinein geführte elektrische Verbindungsleitung mit den Sensoren 44, 46 und im Übrigen auch mit der Detektoreinrichtung 40 und der Volumenmesseinrichtung 42 verbunden sein. Die Anschlüsse an die Sensoren 44, 46 bzw. die Detektoreinrichtung 40 und Volumenmesseinrichtung 42 liegen dabei jeweils innerhalb des Hohlraums 24 der Kapsel 12. An ihrem anderen Ende kann die Verbindungsleitung ebenfalls in einen gekapselten Anschlussraum der Auswerteeinrichtung geführt sein, wobei der Anschluss an die Auswerteeinrichtung innerhalb dieser Kapsel liegt. Zur weiteren Absicherung kann die elektrische Verbindungsleitung abgeschirmt sein. Diese zweite Kapsel (nicht gezeigt) kann in gleicher Weise wie die oben erläuterte Kapsel 12 gegen ein unbefugtes Öffnen gesichert sein. Auf diese Weise wird eine Manipulation der Signalübertragung zwischen der Kapsel 12 der Anlage und der Auswerteeinrichtung, insbesondere einem in der Auswerteeinrichtung angeordneten elektronischen Zählerkopf, sicher verhindert. Es sei noch erwähnt, dass beide Kapseln aus einem Metallwerkstoff bestehen können.

Es ist weiterhin möglich, dass beispielsweise integriert in die Detektoreinrichtung 40 und damit ebenfalls in dem durch die Kapsel 12 gebildeten Hohlraum 24 weiterhin ein Wasserdetektor zur Detektion von Wassereinschlüssen in der durch die Abgabeleitung fließenden Flüssigkeit angeordnet ist. Auch der Wasserdetektor kann über die abgesicherte Verbindungsleitung mit der Auswerteeinrichtung verbunden sein. Die Signalübertragung über die elektrische Verbindungsleitung zwischen der Kapsel 12 und der Auswerteeinrichtung kann analog erfolgen. Insbesondere kann dauerhaft ein Strom über die Signalleitung fließen, der in Abhängigkeit von dem zu übertragenden Signal in der Höhe variiert wird. Außerdem ist in den Figuren erkennbar, dass abgesehen von der Einlassöffnung 28 und der Auslassöffnung 32 für die Abschnitte 30 bzw. 34 der Abgabeleitung kein Zugang in die Kapsel 12 und insbesondere zu dem Abschnitt 26 der Abgabeleitung innerhalb des Hohlraums 24 der Kapsel 12 besteht. Im Besonderen ist keine Entlüftungsleitung vorgesehen, die manipuliert werden könnte. Es ist weiterhin möglich, dass auch die übrigen, in den Figuren nicht gezeigten, außerhalb der Kapsel 12 verlaufenden Abschnitte der Abgabeleitung ohne eine solche Entlüftungsleitung ausgebildet sind.

Mit der erfindungsgemäßen Anlage wird in konstruktiv einfacher Weise eine Manipulation der innerhalb der Kapsel 12 angeordneten Messeinrichtungen sicher verhindert. Hierdurch ist eine unerlaubte Entnahme von Flüssigkeit aus den Kammern des Tankwagens sicher feststellbar.

## Patentansprüche

1. Anlage zur Abgabe von Flüssigkeit aus einem mindestens eine Kammer enthaltenden Tankwagen, umfassend
- mindestens eine mit mindestens einem Auslassventil der mindestens einen Kammer des Tankwagens verbindbare Abgabeleitung (26, 30, 34), an deren Ende ein Abgabeventil zur Abgabe von über das Auslassventil aus der Kammer durch die Abgabeleitung (26, 30, 34) fließende Flüssigkeit angeordnet ist,
- mindestens eine Volumenmesseinrichtung (42) zur Messung des über die Abgabeleitung (26, 30, 34) abgegebenen Flüssigkeitsvolumens,
- mindestens eine Detektoreinrichtung (40) zur Detektion von Gaseinschlüssen in der durch die Abgabeleitung (26, 30, 34) fließenden Flüssigkeit und/oder mindestens eine Abscheideeinrichtung zum Abscheiden von Gaseinschlüssen in der durch die Abgabeleitung (26, 30, 34) fließenden Flüssigkeit,
- **dadurch gekennzeichnet, dass** die mindestens eine Volumenmesseinrichtung (42) in einer verschließbaren Kapsel (12) angeordnet ist, die mit Mitteln versehen ist, die ein unbefugtes Öffnen der Kapsel (12) anzeigen, und dass die Detektoreinrichtung (40) und/oder die Abscheideeinrichtung ebenfalls in der Kapsel (12) angeordnet ist.

2. Anlage zur Abgabe von Flüssigkeit aus einem mindestens eine Kammer enthaltenden Tankwagen, umfassend
- mindestens eine mit mindestens einem Auslassventil der mindestens einen Kammer des Tankwagens verbindbare Abgabeleitung (26, 30, 34), an deren Ende ein Abgabeventil zur Abgabe von über das Auslassventil aus der Kammer durch die Abgabeleitung (26, 30, 34) fließende Flüssigkeit angeordnet ist,
- mindestens eine Volumenmesseinrichtung (42) zur Messung des über die Abgabeleitung (26, 30, 34) abgegebenen Flüssigkeitsvolumens,
- mindestens eine Detektoreinrichtung (40) zur Detektion von Gaseinschlüssen in der durch die Abgabeleitung (26, 30, 34) fließenden Flüssigkeit und/oder mindestens eine Abscheideeinrichtung zum Abscheiden von Gaseinschlüssen in der durch die Abgabeleitung (26, 30, 34) fließenden Flüssigkeit,
- **dadurch gekennzeichnet, dass** die mindestens eine Volumenmesseinrichtung (42) in einer nicht zerstörungsfrei zu öffnenden Kapsel (12) angeordnet ist, und dass die Detektoreinrichtung (40) und/oder die Abscheideeinrichtung ebenfalls in der Kapsel (12) angeordnet ist.

3. Anlage nach Anspruch 1, **dadurch gekennzeichnet, dass** die Mittel der Kapsel (12), die ein unbefugtes Öffnen der Kapsel (12) anzeigen, mindestens einen Sensor (44, 46) umfassen, der ein unbefugtes Öffnen der Kapsel (12) anzeigt.

4. Anlage nach Anspruch 3, **dadurch gekennzeichnet, dass** der mindestens eine Sensor (44, 46) ein elektronischer Sensor ist.

5. Anlage nach Anspruch 4, **dadurch gekennzeichnet, dass** der mindestens eine Sensor (44, 46) einen RFID-Transponder umfasst.

6. Anlage nach Anspruch 5, **dadurch gekennzeichnet, dass** der RFID-Transponder bei verschlossener Kapsel (12) aktiv ist und bei geöffneter Kapsel (12) passiv ist.

7. Anlage nach einem der Ansprüche 5 oder 6, **dadurch gekennzeichnet, dass** der RFID-Transponder bei verschlossener Kapsel (12) oder bei geöffneter Kapsel (12) ein codiertes Signal an eine Auswerteeinrichtung der Anlage sendet, wobei sich die Codierung der Signale ändert.

8. Anlage nach einem der Ansprüche 3 bis 7, **dadurch gekennzeichnet, dass** der mindestens eine Sensor (44, 46) innerhalb der Kapsel (12) angeordnet ist, so dass er bei geschlossener Kapsel (12) von außen nicht zugänglich ist.

9. Anlage nach einem der vorhergehenden Ansprüche, **dadurch gekennzeichnet, dass** die Detektoreinrichtung (40) weiterhin einen Wasserdetektor zur Detektion von Wassereinschlüssen in der durch die Abgabeleitung (26, 30, 34) fließenden Flüssigkeit umfasst.

10. Anlage nach einem der vorhergehenden Ansprüche, **dadurch gekennzeichnet, dass** die Verbindungen (36, 38) zwischen einem durch die Kapsel (12) verlaufenden Abschnitt (26) der Abgabeleitung und den außerhalb der Kapsel (12) verlaufenden Abschnitten (30, 34) der Abgabeleitung innerhalb der Kapsel (12) angeordnet sind.

11. Anlage nach Anspruch 10, **dadurch gekennzeichnet, dass** bei verschlossener Kapsel (12) ein Zugang zu dem innerhalb der Kapsel (12) verlaufenden Abschnitt (26) der Abgabeleitung von außen nur über die innerhalb der Kapsel (12) angeordneten Verbindungen (36, 38) möglich ist.

12. Anlage nach einem der vorhergehenden Ansprüche, **dadurch gekennzeichnet, dass** sie weiterhin mindestens eine Auswerteeinrichtung umfasst zur Auswertung von Signalen von der innerhalb der Kapsel (12) angeordneten Volumenmesseinrichtung (42) und/oder der innerhalb der Kapsel (12) angeordneten Detektoreinrichtung (40) und/oder der innerhalb der Kapsel (12) angeordneten Abscheideeinrichtung und/oder den Mitteln, die ein unbefugtes Öffnen der Kapsel (12) anzeigen.

13. Anlage nach Anspruch 12, **dadurch gekennzeichnet, dass** die Auswerteeinrichtung außerhalb der Kapsel (12) angeordnet ist und mittels einer in die Kapsel (12) geführten elektrischen Verbindungsleitung mit der Volumenmesseinrichtung (42) und/oder der Detektoreinrichtung (40) und/oder der Abscheideeinrichtung und/oder den Mitteln, die ein unbefugtes Öffnen der Kapsel (12) anzeigen, verbunden ist.

14. Anlage nach Anspruch 13, **dadurch gekennzeichnet, dass** die elektrische Verbindungsleitung abgeschirmt ist.

15. Anlage nach einem der Ansprüche 12 oder 13, **dadurch gekennzeichnet, dass** die Auswerteeinrichtung dazu ausgebildet ist, über die elektrische Verbindungsleitung analoge elektrische Signale zu empfangen.

16. Anlage nach einem der Ansprüche 13 bis 15, **dadurch gekennzeichnet, dass** Anschlussmittel zum Anschließen der Verbindungsleitung an die Auswerteeinrichtung in einer zweiten verschließbaren Kapsel (12) angeordnet sind, die mit Mitteln versehen ist, die ein unbefugtes Öffnen der zweiten Kapsel (12) anzeigen.

17. Anlage nach einem der vorhergehenden Ansprüche, **dadurch gekennzeichnet, dass** sie einen GPS-Empfänger umfasst, mit dem der Ort der Anlage, insbesondere der Ort einer Abgabe von Flüssigkeit aus dem Tankwagen, ermittelbar ist.

18. Anlage nach Anspruch 17, **dadurch gekennzeichnet, dass** sie Sperrmittel umfasst, durch die ein Betrieb der Anlage außerhalb von zuvor definierten Orten gesperrt werden kann.

19. Anlage nach einem der vorhergehenden Ansprüche, **dadurch gekennzeichnet, dass** sie eine Zeiterfassungseinrichtung umfasst, mit der der Zeitpunkt eines Betriebs der Anlage ermittelbar ist.

## Claims

1. A system for dispensing fluid from a tanker containing at least one chamber, comprising
- at least one dispensing line (26, 30, 34) connectable with at least one discharge valve of the at least one chamber of the tanker, on the end of which is arranged a dispensing valve for dispensing fluid flowing via the discharge valve out of the chamber through the dispensing line (26, 30, 34),
- at least one volume measuring device (42) for measuring the fluid volume dispensed via the dispensing line (26, 30, 34),
- at least one detector device (40) for detecting gas inclusions in the fluid flowing through the dispensing line (26, 30, 34) and/or at least one separating device for separating gas inclusions in the fluid flowing through the dispensing line (26, 30, 34),
- **characterized in that** the at least one volume measuring device (42) is arranged in a closable capsule (12), which is provided with means for displaying an unauthorized opening of the capsule (12) and **in that** the detector device (40) and/or the separating device is also arranged in the capsule (12).

2. A system for dispensing fluid from a tanker containing at least one chamber, comprising
- at least one dispensing line (26, 30, 34) connectable with at least one discharge valve of the at least one chamber of the tanker, on the end of which is arranged a dispensing valve for dispensing fluid flowing via the discharge valve out of the chamber through the dispensing line (26, 30, 34),
- at least one volume measuring device (42) for measuring the fluid volume dispensed via the dispensing line (26, 30, 34),
- at least one detector device (40) for detecting gas inclusions in the fluid flowing through the dispensing line (26, 30, 34) and/or at least one separating device for separating gas inclusions in the fluid flowing through the dispensing line (26, 30, 34),
- **characterized in that** the at least one volume measuring device (42) is arranged in a not non-destructive capsule (12) to be opened and **in that** the detector device (40) and/or the separating device is also arranged in the capsule (12).

3. The system according to claim 1, **characterized in that** the means of the capsule (12), which display an unauthorized opening of the capsule (12), comprise at least one sensor (44, 46), which displays an unauthorized opening of the capsule (12).

4. The system according to claim 3, **characterized in that** the at least one sensor (44, 46) is an electronic sensor.

5. The system according to claim 4, **characterized in that** the at least one sensor (44, 46) is an RFID transponder

6. The system according to claim 5, **characterized in that** the RFID transponder is active in the case of a closed capsule (12) and passive in the case of an open capsule (12).

7. The system according to one of claims 5 or 6, **characterized in that** the RFID transponder sends a coded signal to an evaluation device of the system in the case of a closed capsule (12) or in the case of an open capsule (12), wherein the coding of the signals changes.

8. The system according to one of claims 3 to 7, **characterized in that** the at least one sensor (44, 46) is arranged within the capsule (12) such that it is not accessible from outside in the case of a closed capsule (12).

9. The system according to one of the previous claims, **characterized in that** the detector device (40) furthermore comprises a water detector for the detection of water inclusions in the fluid flowing through the dispensing line (26, 30, 34).

10. The system according to one of the previous claims, **characterized in that** the connections (36, 38) between a section (26) of the dispensing line progressing through the capsule (12) and the sections (30, 34) of the dispensing line progressing outside of the capsule (12) are arranged within the capsule (12).

11. The system according to claim 10, **characterized in that**, in the case of a closed capsule (12), access to the section (26) of the dispensing line progressing within the capsule (12) from the outside is only possible via the connections (36, 38) arranged within the capsule (12).

12. The system according to one of the previous claims, **characterized in that** it furthermore comprises at least one evaluation device for the evaluation of signals from the volume measuring device (42) arranged within the capsule (12) and/or from the detector device (40) arranged within the capsule (12) and/or from the separating device arranged within the capsule (12) and/or the means that display an unauthorized opening of the capsule (12).

13. The system according to claim 12, **characterized in that** the evaluation device is arranged outside the capsule (12) and is connected with the volume measuring device (42) and/or the detector device (40) and/or the separating device and/or the means that display an unauthorized opening of the capsule (12) by means of an electrical connection line fed into the capsule (12).

14. The system according to claim 13, **characterized in that** the electrical connection line is shielded.

15. The system according to one of claims 12 or 13, **characterized in that** the evaluation device is designed to receive analog electrical signals via the electrical connection line.

16. The system according to one of claims 13 to 15, **characterized in that** connection means for connecting the connection line to the evaluation device are arranged in a second closable capsule (12), which is provided with means that display an unauthorized opening of the second capsule (12).

17. The system according to one of the previous claims, **characterized in that** it comprises a GPS receiver, with which the location of the system, in particular the location of a dispensing of fluid from the tanker is determinable.

18. The system according to claim 17, **characterized in that** it comprises locking means, through which operation of the system outside of previously defined locations can be blocked.

19. The system according to one of the previous claims, **characterized in that** it comprises a time recording device, with which the time of an operation of the system is determinable.

## Revendications

1. Installation destinée à distribuer du liquide depuis un camion-citerne contenant au moins une chambre, comprenant :
- au moins une conduite de distribution (26, 30, 34) pouvant être raccordée à au moins une vanne de sortie de la chambre, au moins au nombre de un, du camion-citerne, conduite à l'extrémité de laquelle est disposée une vanne de distribution destinée à la distribution de liquide s'écoulant à travers la conduite de distribution (26, 30, 34) via la vanne de sortie à partir de la chambre,
- au moins un dispositif de mesure de volume (42) destiné à la mesure du volume de liquide délivré par le biais de la conduite de distribution (26, 30, 34),
- au moins un dispositif de détection (40) destiné à la détection d'inclusions gazeuses dans le liquide s'écoulant à travers la conduite de distribution (26, 30, 34), et/ou au moins un dispositif de séparation destiné à la séparation d'inclusions gazeuses dans le liquide s'écoulant à travers la conduite de distribution (26, 30, 34),
- **caractérisée en ce que** le dispositif de mesure de volume (42) au moins au nombre de un est disposé dans une capsule (12) pouvant être fermée qui est munie de moyens qui indiquent une ouverture non autorisée de la capsule (12), et **en ce que** le dispositif de détection (40) et/ou le dispositif de séparation est également disposé dans la capsule (12).

2. Installation destinée à distribuer du liquide depuis un camion-citerne contenant au moins une chambre, comprenant :
- au moins une conduite de distribution (26, 30, 34) pouvant être raccordée à au moins une vanne de sortie de la chambre, au moins au nombre de un, du camion-citerne, conduite à l'extrémité de laquelle est disposée une vanne de distribution destinée à la distribution de liquide s'écoulant à travers la conduite de distribution (26, 30, 34) via la vanne de sortie à partir de la chambre,
- au moins un dispositif de mesure de volume (42) destiné à la mesure du volume de liquide délivré via la conduite de distribution (26, 30, 34),
- au moins un dispositif de détection (40) destiné à la détection d'inclusions gazeuses dans le liquide s'écoulant à travers la conduite de distribution (26, 30, 34), et/ou au moins un dispositif de séparation destiné à la séparation d'inclusions gazeuses dans le liquide s'écoulant à travers la conduite de distribution (26, 30, 34),
- **caractérisée en ce que** le dispositif de mesure de volume (42) au moins au nombre de un est disposé dans une capsule (12) qui ne peut pas être ouverte sans destruction, et **en ce que** le dispositif de détection (40) et/ou le dispositif de séparation est également disposé dans la capsule (12).

3. Installation selon la revendication 1, **caractérisée en ce que** les moyens de la capsule (12) qui indiquent une ouverture non autorisée de la capsule (12) comprennent au moins un capteur (44, 46) qui indique une ouverture non autorisée de la capsule (12).

4. Installation selon la revendication 3, **caractérisée en ce que** le capteur (44, 46) au moins au nombre de un est un capteur électronique.

5. Installation selon la revendication 4, **caractérisée en ce que** le capteur (44, 46) au moins au nombre de un comprend un transpondeur RFID.

6. Installation selon la revendication 5, **caractérisée en ce que** le transpondeur RFID est actif quand la capsule (12) est fermée et est passif quand la capsule (12) est ouverte.

7. Installation selon une des revendications 5 ou 6, **caractérisée en ce que** le transpondeur RFID envoie un signal codé à un dispositif d'analyse de l'installation quand la capsule (12) est fermée ou quand la capsule (12) est ouverte, le codage des signaux variant.

8. Installation selon une des revendications 3 à 7, **caractérisée en ce que** le capteur (44, 46) au moins au nombre de un est disposé à l'intérieur de la capsule (12) de telle sorte que, lorsque la capsule (12) est fermée, le capteur n'est pas accessible de l'extérieur.

9. Installation selon une des revendications précédentes, **caractérisée en ce que** le dispositif de détection (40) comprend en outre un détecteur d'eau destiné à la détection d'inclusions aqueuses dans le liquide s'écoulant à travers la conduite de distribution (26, 30, 34).

10. Installation selon une des revendications précédentes, **caractérisée en ce que** les raccordements (36, 38) entre un tronçon (26) de la conduite de distribution placé à travers la capsule (12) et les tronçons (30, 34) de la conduite de distribution placés à l'extérieur de la capsule (12) sont disposés à l'intérieur de la capsule (12).

11. Installation selon la revendication 10, **caractérisée en ce que**, quand la capsule (12) est fermée, un accès, à partir de l'extérieur, au tronçon (26) de la conduite de distribution placé à l'intérieur de la capsule (12) n'est possible que par le biais des raccordements (36, 38) disposés à l'intérieur de la capsule (12).

12. Installation selon une des revendications précédentes, **caractérisée en ce qu'**elle comprend en outre au moins une unité d'analyse destinée à l'analyse de signaux du dispositif de mesure de volume (42) disposé à l'intérieur de la capsule (12) et/ou du dispositif de détection (40) disposé à l'intérieur de la capsule (12) et/ou du dispositif de séparation disposé à l'intérieur de la capsule (12) et/ou des moyens qui indiquent une ouverture non autorisée de la capsule (12).

13. Installation selon la revendication 12, **caractérisée en ce que** l'unité d'analyse est disposée à l'extérieur de la capsule (12) et est, au moyen d'une ligne de connexion électrique guidée dans la capsule (12), connectée au dispositif de mesure de volume (42) et/ou au dispositif de détection (40) et/ou au dispositif de séparation et/ou aux moyens qui indiquent une ouverture non autorisée de la capsule (12).

14. Installation selon la revendication 13, **caractérisée en ce que** la ligne de connexion électrique est blindée.

15. Installation selon une des revendications 12 ou 13, **caractérisée en ce que** l'unité d'analyse est constituée pour recevoir des signaux électriques analogiques via la ligne de connexion électrique.

16. Installation selon une des revendications 13 à 15, **caractérisée en ce que** des moyens de connexion destinés à la connexion de la ligne de connexion à l'unité d'analyse sont disposés dans une deuxième capsule (12) pouvant être fermée qui est munie de moyens qui indiquent une ouverture non autorisée de la deuxième capsule (12).

17. Installation selon une des revendications précédentes, **caractérisée en ce qu'**elle comprend un récepteur GPS avec lequel il est possible de déterminer l'emplacement de l'installation, en particulier le lieu d'une distribution de liquide depuis le camion-citerne.

18. Installation selon la revendication 17, **caractérisée en ce qu'**elle comprend des moyens de blocage avec lesquels un fonctionnement de l'installation en dehors d'emplacements définis au préalable peut être bloqué.

19. Installation selon une des revendications précédentes, **caractérisée en ce qu'**elle comprend un dispositif d'enregistrement horaire avec lequel le moment d'un fonctionnement de l'installation peut être déterminé.
